# EUROPEAN PATENT APPLICATION

(11) **EP 4 773 222 A1**
(43) Date of publication of application: **08.07.2026**
(21) Application number: 24859658.7
(22) Date of filing: 23.08.2024
(51) Int. Cl.: H01M 4/36, H01M 4/505, H01M 4/525

(54) **COATED ACTIVE MATERIAL, POSITIVE ELECTRODE, AND SECONDARY BATTERY**

(30) Priority: 31.08.2023 JP 2023141351
(71) Applicant: Panasonic Intellectual Property Management Co., Ltd., Kadoma-shi, Osaka 571-0057 (JP)
(72) Inventor: ASANO, Kazuko, Kadoma-shi, Osaka 571-0057 (JP); OKI, Yukihiro, Kadoma-shi, Osaka 571-0057 (JP); SHIRAKAMI, Atsuro, Kadoma-shi, Osaka 571-0057 (JP)
(74) Representative: Novagraaf International SA
(86) International application number: PCT/JP2024/030089
(87) International publication number: WO 2025/047625

(57) **Abstract**

A coated active material (10) according to the present disclosure includes: a positive electrode active material; and an apatite-containing particle layer (13) coating at least a portion of a surface of a particle of the positive electrode active material, the apatite-containing particle layer (13) including an apatite-containing particle (12). A positive electrode according to the present disclosure includes: a positive electrode current collector; and a positive electrode active material layer supported on the positive electrode current collector, wherein the positive electrode active material layer includes the coated active material (10) according to the present disclosure.

## Description

### TECHNICAL FIELD

The present disclosure relates to a coated active material, a positive electrode, and a secondary battery.

### BACKGROUND ART

Conventional secondary batteries are known to undergo side reactions such as reduction and dissolution of transition metals contained in active materials as well as decomposition reactions of electrolyte solutions caused thereby. Such side reactions accelerate degradation of secondary batteries, leading to disadvantages such as a decrease in cycle characteristics.

Patent Literature 1 discloses, as a positive electrode capable of increasing the capacity retention during charge and discharge cycles, a positive electrode including: a first compound particle including a lithium transition metal composite oxide serving as a positive electrode active material; and a second compound particle including Ca and P.

### CITATION LIST

### Patent Literature

Patent Literature 1: JP 2018-137147 A

### SUMMARY OF INVENTION

### Technical Problem

The present disclosure provides a coated active material that can effectively suppress side reactions in a positive electrode to enhance the cycle characteristics of a secondary battery.

### Solution to Problem

A coated active material of the present disclosure includes:
a positive electrode active material; and
an apatite-containing particle layer coating at least a portion of a surface of a particle of the positive electrode active material, the apatite-containing particle layer including an apatite-containing particle.

### Advantageous Effects of Invention

The present disclosure can provide a coated active material that can effectively suppress side reactions in a positive electrode to enhance the cycle characteristics of a secondary battery.

### BRIEF DESCRIPTION OF DRAWINGS

FIG. 1 is a cross-sectional view schematically showing the configuration of a coated active material according to Embodiment 1.
FIG. 2 is a cross-sectional view schematically showing the configuration of a positive electrode according to Embodiment 2.
FIG. 3 is a longitudinal sectional view schematically showing a secondary battery according to Embodiment 3.

### DESCRIPTION OF EMBODIMENTS

Embodiments of the present disclosure are described below with reference to the drawings. The present disclosure is not limited to the following embodiments.

### (Embodiment 1)

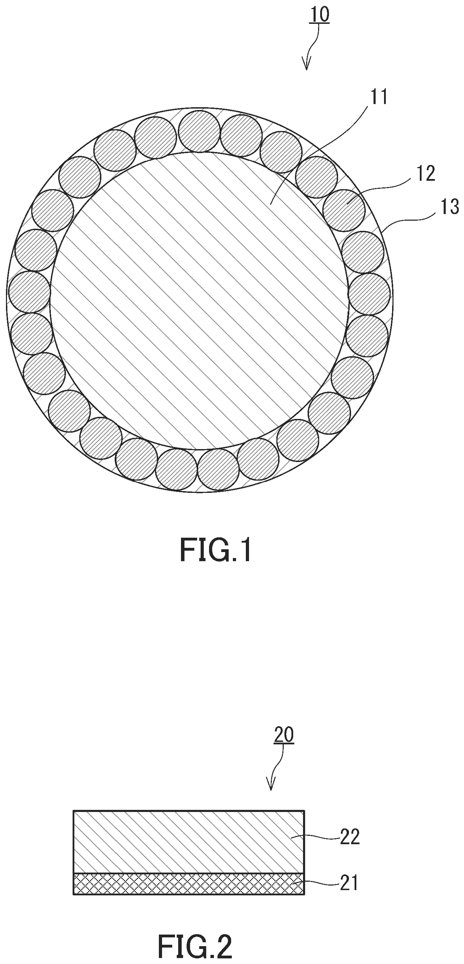

FIG. 1 is a cross-sectional view schematically showing the configuration of a coated active material according to Embodiment 1. A coated active material 10 includes a positive electrode active material and an apatite-containing particle layer 13 coating at least a portion of the surface of a particle 11 of the positive electrode active material, and the apatite-containing particle layer 13 includes an apatite-containing particle 12. In other words, the coated active material 10 according to Embodiment 1 is a composite particle in which the particle 11 of the positive electrode active material serves as a core particle while the apatite-containing particle 12 serves as a shell particle, and at least a portion of the surface of the core particle is coated with the shell particle.

In a battery, contact between the positive electrode active material and the electrolyte causes side reactions such as metal dissolution from the positive electrode active material and gas generation caused by decomposition reaction of the electrolyte, resulting in degradation of the battery. In the coated active material 10 according to Embodiment 1, at least a portion of the surface of the particle 11 of the positive electrode active material is coated with the apatite-containing particle layer 13. This configuration reduces the contact area between the positive electrode active material and the electrolyte, and accordingly, side reactions such as metal dissolution from the positive electrode active material can be suppressed. Therefore, the coated active material 10 according to Embodiment 1 can effectively suppress side reactions in the positive electrode even after repeated charging and discharging, enhancing the cycle characteristics of the secondary battery.

In general, when a coating formed of a material different from the positive electrode active material is formed on the surface of the positive electrode active material in order to hinder contact between the positive electrode active material and the electrolyte, the coating acts as a resistance factor, thereby causing a decrease in the output characteristics (i.e., discharge capacity) of the positive electrode. In contrast, the coated active material 10 according to Embodiment 1 is less susceptible to a decrease in output characteristics in spite of the positive electrode active material being coated with the apatite-containing particle layer 13. For example, by adjusting the proportion of the apatite-containing particle layer 13 in the entire coated active material 10 or by adjusting the size of the apatite-containing particle 12, it is also possible to instead enhance the output characteristics of the positive electrode because the apatite-containing particle layer 13 is present. Such an effect is considered to be specific to the apatite-containing particle layer 13. The presence of the apatite-containing particle 12 on the surface of the particle 11 of the positive electrode active material is considered to enhance the Li-ion conductivity. That is, because the apatite-containing particle 12 present on the surface of the particle 11 of the positive electrode active material assists in accelerating the migration of Li ions, it is considered that even when the apatite-containing particle 12 adheres to the surface of the positive electrode active material, the output characteristics are less likely to decrease and can also, instead, be enhanced. Owing to the special Li-ion conduction enhancement effect provided by the apatite-containing particle 12, as described above, the coated active material 10 according to Embodiment 1 can exhibit both a cycle characteristic enhancement effect and an output characteristic enhancement effect.

Here, in the present specification, the term "apatite" refers to a compound including calcium (Ca), a phosphate group (PO₄), and at least one selected from the group consisting of an OH group, F, and Cl, that is, a calcium phosphate-based apatite.

The apatite contained in the apatite-containing particle 12 may include an OH group. That is, the apatite-containing particle 12 may include hydroxyapatite. With this configuration, the coated active material 10 according to Embodiment 1 can more effectively suppress side reactions in the positive electrode, further enhancing the cycle characteristics of the secondary battery. The apatite-containing particle 12 may be formed, for example, of hydroxyapatite.

The apatite-containing particle 12 may include an apatite having a composition represented by the following formula (1):

Caₓ(PO₄)_{y}(A)_{z} (1)

in the formula (1), A is at least one selected from the group consisting of OH, F, and Cl, and 0 < x < 10, 0 < y < 6, and 0 ≤ z < 2 are satisfied.

When the apatite-containing particle 12 includes the apatite having the composition represented by the above formula (1), the coated active material 10 according to Embodiment 1 can more effectively suppress side reactions in the positive electrode, further enhancing the cycle characteristics of the secondary battery.

In the above formula (1), A may be OH in order to more reliably enhance cycle characteristics. That is, the apatite-containing particle 12 may include hydroxyapatite having a composition represented by Caₓ(PO₄)_{y}(OH)_{z}.

In the above formula (1), x may satisfy 2 < x < 8, 4 < x < 6, 4.5 < x < 5.5, or x = 5.

In the above formula (1), y may satisfy 1 < y < 5, 2 < y < 4, 2.5 < y < 3.5, or y = 3.

In the above formula (1), z may satisfy 0 < z < 2, 0.5 < z < 1.5, or z = 1.

The apatite-containing particle 12 may include, as the apatite having the composition represented by the above formula (1), at least one selected from the group consisting of Ca₅(PO₄)₃(OH), Ca₅(PO₄)₃F, and Ca₅(PO₄)₃Cl, and may include Ca₅(PO₄)₃(OH) as the apatite having the composition represented by the above formula (1).

The crystal structure of the apatite contained in the apatite-containing particle 12 can be identified, for example, by observing the particle using a transmission electron microscope (TEM) and performing electron diffraction on the particle. The composition of the apatite contained in the apatite-containing particle 12 can be identified, for example, by energy dispersive X-ray spectroscopy using a transmission electron microscope (TEM-EDX) or ICP emission spectroscopy.

The apatite contained in the apatite-containing particle has, for example, a hexagonal crystal structure. Examples of an apatite having such a crystal structure include Ca₅(PO₄)₃(OH) and Ca₅(PO₄)₃F. With this configuration, the coated active material 10 according to Embodiment 1 can more effectively suppress side reactions in the positive electrode, further enhancing the cycle characteristics of the secondary battery.

The particle diameter of the apatite-containing particle 12 is, for example, 1 µm or less, and may be 500 nm or less. The apatite-containing particle 12 having such a particle diameter can readily coat the surface of the particle 11 of the positive electrode active material. This facilitates a further reduction in the contact area between the positive electrode active material and the electrolyte. Accordingly, side reactions in the positive electrode can be more effectively suppressed, obtaining more excellent cycle characteristics. Furthermore, the apatite-containing particle 12 having a particle diameter as described above can more readily exhibit the above-described Li-ion conduction enhancement effect, thereby further enhancing the output characteristics of the secondary battery. The lower limit of the particle diameter of the apatite-containing particle 12 is not particularly limited and is, for example, 5 nm.

In the coated active material 10 according to Embodiment 1, the particle diameter of the apatite-containing particle 12 can be measured, for example, using a scanning electron microscope (SEM) image obtained by SEM observation of the coated active material 10 in which a cross section of the apatite-containing particle 12 is exposed. The particle diameter of the apatite-containing particle 12 means the longest diameter within the particle of the apatite-containing particle 12.

The positive electrode active material can be a material capable of occluding and releasing lithium ions. The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode active material may include a lithium nickel oxide having a layered rock salt-type crystal structure. The proportion of Ni among metal elements excluding Li that are contained in the lithium nickel oxide may be 50 at% or more. The lithium nickel oxide may include other transition metals. Lithium nickel oxides are useful for achieving a high operating voltage. According to the configuration of the coated active material according to Embodiment 1, dissolution of metal ions from the positive electrode active material can be suppressed. Since nickel is susceptible to dissolution from the positive electrode active material, the technique of the present disclosure is particularly expected to be effective in suppressing such dissolution.

The lithium nickel oxide may be represented by the following composition formula (2). An element M1 is at least one selected from the group consisting of V, Co, and Mn. An element M2 is at least one selected from the group consisting of Mg, Al, Ca, Ti, Cu, Zn, and Nb. In the composition formula (2), 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5 are satisfied.

Li_{α}Niₓ₁M1ₓ₂M2₍₁₋ₓ₁₋ₓ₂₎O_{2+β} (2)

The shape of the particle 11 of the positive electrode active material is not particularly limited. The shape of the particle 11 is, for example, an acicular, flaky, spherical, or ellipsoidal shape.

In the coated active material 10 according to Embodiment 1, the particle diameter of the particle 11 of the positive electrode active material is larger than the particle diameter of the apatite-containing particle 12. The ratio of the particle diameter of the particle 11 of the positive electrode active material to the particle diameter of the apatite-containing particle 12 (the particle diameter of the particle 11 of the positive electrode active material/the particle diameter of the apatite-containing particle 12) is, for example, 2 or more and 40,000 or less, desirably 5 or more and 1,500 or less, and more desirably 10 or more and 150 or less. In the coated active material 10 according to Embodiment 1, the particle diameter of the particle 11 of the positive electrode active material can be measured, for example, using an SEM image obtained by SEM observation of the coated active material 10 in which a cross section of the particle 11 of the positive electrode active material is exposed. The particle diameter of the particle 11 of the positive electrode active material means the longest diameter within the particle of the particle 11 of the positive electrode active material.

In the coated active material 10 according to Embodiment 1, the proportion of the apatite-containing particle 12 is determined in consideration of the surface area of the particle 12 of the positive electrode active material and the particle diameter of the apatite-containing particle 12. For example, when the apatite-containing particle 12 having a particle diameter of 20 nm to 300 nm is used to coat the core particle having a particle diameter of 1.0 µm to 5.0 µm, the proportion of the apatite-containing particle/(the apatite-containing particle + the core particle) is, for example, 0.1 mass% or more and 15 mass% or less, desirably 0.3 mass% or more and 12 mass% or less, and more desirably 0.3 mass% or more and 6.0 mass% or less. Owing to the proportion of the apatite-containing particle 12 being 0.1 mass% or more, the surface area of the particle 11 of the positive electrode active material coated with the apatite-containing particle 12 increases, thereby facilitating a further reduction in the contact area between the positive electrode active material and the electrolyte. Accordingly, side reactions in the positive electrode can be more effectively suppressed, obtaining more excellent cycle characteristics. Owing to the proportion of the apatite-containing particle 12 being 15 mass% or less, an increase in the resistance of the apatite-containing particle layer 13 can be suppressed, enhancing the output characteristics of the secondary battery. To further enhance the output characteristics of the secondary battery, the proportion of the apatite-containing particle 12 is desirably 6.0 mass% or less.

The proportion of the apatite-containing particle 12 in the coated active material 10 according to Embodiment 1 can be measured, for example, using TEM-EDX.

The average particle diameter of the coated active material 10 according to Embodiment 1 is, for example, 1 µm or more and 20 µm or less, desirably 1 µm or more and 10 µm or less, and more desirably 1 µm or more and 6 µm or less. The average particle diameter of the coated active material 10 means the particle diameter (median diameter) at a cumulative volume of 50% in the volumetric particle size distribution. The volumetric particle size distribution is measured, for example, using a laser diffraction particle size analyzer.

The coated active material 10 according to Embodiment 1 can be manufactured by the following method.

The apatite-containing particle layer 13 is obtained by adhering the apatite-containing particle 12 to the surface of the particle 11 of the positive electrode active material.

For example, the apatite-containing particle 12 is adhered to the surface of the particle 11 of the positive electrode active material by a mechanical composing method. Specifically, the apatite-containing particle 12 is adhered to the surface of the particle 11 of the positive electrode active material, for example, by a mechanochemical method, to form the apatite-containing particle layer 13. The positive electrode active material and the apatite-containing particles are mixed in an appropriate ratio to obtain a mixture, and mechanical energy is imparted to the mixture. Examples of apparatuses capable of imparting mechanical energy include ball mills and processing devices (particle composing machines), such as "MECHANO FUSION" (manufactured by Hosokawa Micron Corporation), "NOBILTA" (manufactured by Hosokawa Micron Corporation), and "BALANCE GRAN" (manufactured by Freund-Turbo Corporation), and "Hybridization System" (manufactured by Nara Machinery Co., Ltd.).

### (Embodiment 2)

FIG. 2 is a cross-sectional view schematically showing the configuration of a positive electrode 20 according to Embodiment 2. The positive electrode 20 includes a positive electrode current collector 21 and a positive electrode active material layer 22 supported on the positive electrode current collector 21. The positive electrode active material layer 22 includes the coated active material according to Embodiment 1.

The positive electrode active material layer 22 may include only the coated active material according to Embodiment 1 as the positive electrode active material, or may further include a positive electrode active material different from the coated active material according to Embodiment 1.

The positive electrode active material layer 22 may include other materials such as a conductive additive, an ion conductor, and a binder as necessary.

The conductive additive and the ion conductor are used to reduce the resistance of the positive electrode 20. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene. At least one selected from these conductive additives can be used.

The binder is used to enhance the binding properties of the materials constituting the positive electrode 20. Examples of the binder include polymer materials such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, and polyimide. At least one selected from these binders can be used.

The positive electrode current collector 21 can be a sheet or film made of a metal material such as stainless steel, nickel, copper, or an alloy of any of these. The sheet or film may be porous or nonporous. The sheet or film is metal foil, metal mesh, or the like. A carbon material, such as carbon, may be applied as a conductive auxiliary material onto the surface of the positive electrode current collector 21.

The positive electrode 20 according to Embodiment 2 can be prepared, for example, by mixing the materials constituting the positive electrode active material layer 22 and a solvent to prepare a positive electrode slurry, applying the positive electrode slurry onto the positive electrode current collector 21 to form a coating film, and then drying the coating film.

### (Embodiment 3)

A secondary battery according to Embodiment 3 includes the positive electrode according to Embodiment 2, a negative electrode, and an electrolyte. By using the positive electrode according to Embodiment 2, the cycle characteristics of the secondary battery can be improved.

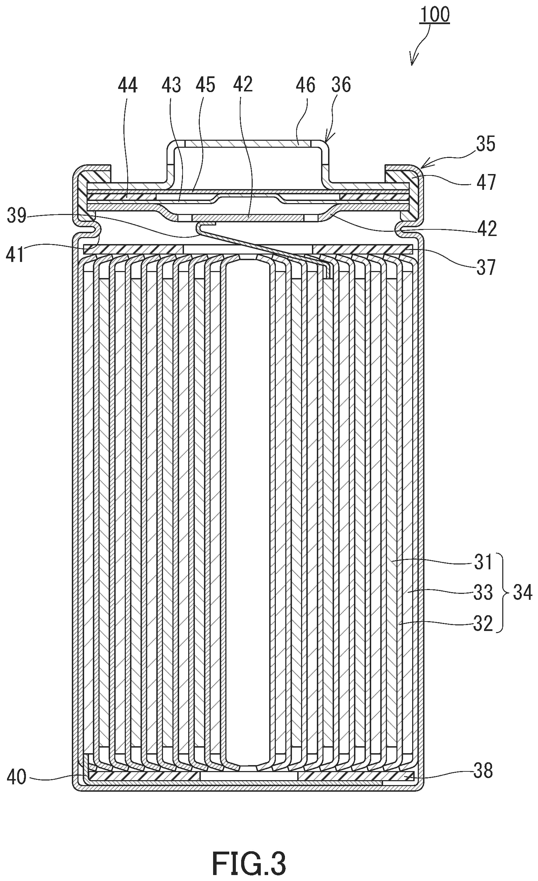

FIG. 3 is a longitudinal sectional view schematically showing a secondary battery 100 according to Embodiment 3. The secondary battery 100 is a cylindrical battery that includes a cylindrical battery case, a wound-type electrode group 34, and an electrolyte solution that is not illustrated. The electrode group 34 is housed in the battery case and is in contact with the electrolyte solution.

The battery case is composed of a case body 35 that is a bottomed cylindrical metal-made container and a sealing body 36 that seals the opening of the case body 35. A gasket 47 is disposed between the case body 35 and the sealing body 36. The gasket 47 ensures hermetic sealing of the battery case. Within the case body 35, insulating plates 37 and 38 are disposed at the respective ends of the electrode group 34 in the direction of the winding axis of the electrode group 34.

The case body 35 has, for example, a stepped portion 41. The stepped portion 41 can be formed by pressing a portion of the side wall of the case body 35 from the outside. The stepped portion 41 may be formed in an annular shape on the side wall of the case body 35 along the circumferential direction of a virtual circle defined by the case body 35. In this case, the sealing body 36 is supported, for example, by the surface of the stepped portion 41 facing the opening.

The sealing body 36 includes a filter 42, a lower valve body 43, an insulating member 44, an upper valve body 45, and a cap 46. In the sealing body 36, these components are stacked in the above order. The sealing body 36 is attached to the opening of the case body 35 so that the cap 46 is located outside the case body 35 and the filter 42 is located inside the case body 35.

The above components of the sealing body 36 are each, for example, disk-shaped or ring-shaped. The above components are electrically connected to each other, except for the insulating member 44.

The electrode group 34 includes a positive electrode 31, a separator 32, and a negative electrode 33. The positive electrode 31, the separator 32, and the negative electrode 33 are each strip-shaped. The width directions of the strip-shaped positive electrode 31 and negative electrode 33 are, for example, parallel to the winding axis of the electrode group 34. The separator 32 is disposed between the positive electrode 31 and the negative electrode 33. The positive electrode 31 and the negative electrode 33 are spirally wound with the separator 32 interposed between these electrodes.

When a cross section of the secondary battery 100 in a direction perpendicular to the winding axis of the electrode group 34 is observed, the positive electrode 31 and the negative electrode 33 are alternately stacked in the radial direction of the virtual circle defined by the case body 35, with the separator 32 interposed between these electrodes.

The positive electrode 31 is electrically connected, via a positive electrode lead 39, to the cap 46 that also serves as the positive electrode terminal. One end of the positive electrode lead 39 is, for example, connected to the vicinity of the center of the positive electrode 31 in the longitudinal direction of the positive electrode 31. The positive electrode lead 39 extends from the positive electrode 31 to the filter 42 through a through hole formed in the insulating plate 37. The other end of the positive electrode lead 39 is, for example, welded to the surface of the filter 42 facing the electrode group 34.

The negative electrode 33 is electrically connected, via a negative electrode lead 40, to the case body 35 that also serves as the negative electrode terminal. One end of the negative electrode lead 40 is, for example, connected to an end of the negative electrode 33 in the longitudinal direction of the negative electrode 33. The other end of the negative electrode lead 40 is, for example, welded to the inner bottom surface of the case body 35.

The constituents of the secondary battery 100 are described in detail below.

The positive electrode 31 is the positive electrode according to Embodiment 2.

The negative electrode 33 includes a negative electrode active material according to the present embodiment. The negative electrode 33 includes, for example, a negative electrode current collector and a negative electrode mixture layer supported on the surface of the negative electrode current collector.

The negative electrode current collector can be a sheet or film made of a metal material such as stainless steel, nickel, copper, or an alloy of any of these. The sheet or film may be porous or nonporous. The sheet or film is metal foil, metal mesh, or the like. A carbon material, such as carbon, may be applied as a conductive auxiliary material onto the surface of the negative electrode current collector.

The negative electrode mixture layer includes the negative electrode active material according to the present embodiment. The negative electrode mixture layer may include other materials such as a conductive additive, an ion conductor, and a binder as necessary. The materials described above for the positive electrode mixture layer can also be used as the conductive additive, the ion conductor, and the binder in the negative electrode mixture layer.

The electrolyte solution may include a nonaqueous solvent and a lithium salt dissolved in the nonaqueous solvent. The concentration of the lithium salt in the electrolyte solution may be, for example, 0.5 mol/L or more and 2 mol/L or less. By controlling the lithium salt concentration within the above range, an electrolyte solution with excellent ion conductivity and moderate viscosity can be obtained. However, the lithium salt concentration is not limited to the above.

The nonaqueous solvent can be a cyclic carbonate, a chain carbonate, a cyclic ether, a chain ether, a nitrile, an amide, or the like. One selected from these solvents may be used, or two or more thereof may be used in combination.

The lithium salt can be lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, or the like. One selected from these electrolyte salts may be used, or two or more thereof may be used in combination.

It is usually desirable to interpose a separator between the positive electrode and the negative electrode. The separator 32 has high ion permeability as well as moderate mechanical strength and insulation properties. The separator 32 can be a microporous film, a woven fabric, a nonwoven fabric, or the like. The material of the separator 32 can be, for example, a polymer. The polymer may be, for example, a polyolefin, such as polypropylene or polyethylene.

In the secondary battery of the present disclosure, a polymer provided as the separator may, for example, be impregnated with the electrolyte solution. That is, the secondary battery of the present disclosure may have a structure in which an electrolyte solution and a polymer are used in combination.

The secondary battery of the present disclosure may further include a solid electrolyte as an electrolyte. That is, the secondary battery of the present disclosure may have a hybrid structure in which an electrolyte solution and a solid electrolyte are used in combination. Examples of the solid electrolyte material include a halide solid electrolyte, a sulfide solid electrolyte, an oxide solid electrolyte, and an organic polymer solid electrolyte. In the present disclosure, the term "halide solid electrolyte" means a solid electrolyte that contains a halogen element as the main component of the anions. The term "sulfide solid electrolyte" means a solid electrolyte that contains sulfur as the main component of the anions. The term "oxide solid electrolyte" means a solid electrolyte that contains oxygen as the main component of the anions. The term "main component of the anions" means the anion having the largest amount of substance among all the anions constituting the solid electrolyte. The coating material in the secondary battery of the present disclosure can include a halide solid electrolyte.

In the present disclosure, as an example of the structure of the secondary battery according to Embodiment 3, the configuration example shown in FIG. 3 is described. In this example, the secondary battery includes a stacked-type electrode group in which a positive electrode and a negative electrode are stacked with a separator interposed therebetween, and an electrolyte solution, both of which are housed in an outer casing. However, the secondary battery according to the present disclosure is not limited to this configuration example. The secondary battery according to the present disclosure may be in any form such as a cylindrical type, a prismatic type, a coin type, a button type, or a laminated type. Furthermore, as the electrode group in the secondary battery according to the present disclosure, the stacked-type electrode group may be replaced with any other type of electrode group such as an electrode group in which a positive electrode and a negative electrode are wound with a separator interposed therebetween.

The application of the coated active material and the positive electrode of the present disclosure is not limited to the secondary battery 100. The coated active material and the positive electrode of the present disclosure can be applied to various secondary batteries in addition to lithium secondary batteries, such as sodium secondary batteries and magnesium secondary batteries.

### (Other Embodiments)

### (Supplementary Description)

From the description of the above embodiments, the following techniques are disclosed.

### (Technique 1)

A coated active material including:
a positive electrode active material; and
an apatite-containing particle layer coating at least a portion of a surface of a particle of the positive electrode active material, the apatite-containing particle layer including an apatite-containing particle.

With this configuration, the coated active material according to Technique 1 can effectively suppress side reactions in a positive electrode to enhance the cycle characteristics of a secondary battery.

### (Technique 2)

The coated active material according to Technique 1, wherein
the apatite-containing particle includes an apatite having a composition represented by the following formula (1):

   Caₓ(PO₄)_{y}(A)_{z} (1)
in the formula (1),
the A is at least one selected from the group consisting of OH, F, and Cl, and 0 < x < 10, 0 < y < 6, and 0 ≤ z < 2 are satisfied.

With this configuration, the coated active material according to Technique 2 can more effectively suppress side reactions in a positive electrode to further enhance the cycle characteristics of a secondary battery.

### (Technique 3)

The coated active material according to Technique 2, wherein
the A is OH, and 0 < z < 2 is satisfied.

With this configuration, the coated active material according to Technique 3 can more effectively suppress side reactions in a positive electrode to further enhance the cycle characteristics of a secondary battery.

### (Technique 4)

The coated active material according to Technique 2, wherein
the apatite-containing particle includes, as the apatite having the composition represented by the formula (1), at least one selected from the group consisting of Ca₅(PO₄)₃(OH), Ca₅(PO₄)₃F, and Ca₅(PO₄)₃Cl.

With this configuration, the coated active material according to Technique 4 can more effectively suppress side reactions in a positive electrode to further enhance the cycle characteristics of a secondary battery.

### (Technique 5)

The coated active material according to any one of Techniques 1 to 4, wherein
an apatite contained in the apatite-containing particle has a hexagonal crystal structure.

With this configuration, the coated active material according to Technique 5 can more effectively suppress side reactions in a positive electrode to further enhance the cycle characteristics of a secondary battery.

### (Technique 6)

The coated active material according to any one of Techniques 1 to 5, wherein
a particle diameter of the apatite-containing particle is 1 µm or less.

With this configuration, the coated active material according to Technique 6 can more effectively suppress side reactions in a positive electrode to further enhance the cycle characteristics of a secondary battery.

### (Technique 7)

The coated active material according to any one of Techniques 1 to 6, wherein
a proportion of the apatite-containing particle in the coated active material is 0.1 mass% or more and 15 mass% or less.

With this configuration, the coated active material according to Technique 7 can more effectively suppress side reactions in a positive electrode to further enhance the cycle characteristics of a secondary battery, and can also enhance the output characteristics of a secondary battery.

### (Technique 8)

The coated active material according to any one of Techniques 1 to 7, wherein
a ratio of a particle diameter of the particle of the positive electrode active material to a particle diameter of the apatite-containing particle (the particle diameter of the particle of the positive electrode active material/the particle diameter of the apatite-containing particle) is 2 or more and 40,000 or less.

With this configuration, the coated active material according to Technique 8 can more effectively suppress side reactions in a positive electrode to further enhance the cycle characteristics of a secondary battery.

### (Technique 9)

A positive electrode including:
a positive electrode current collector; and
a positive electrode active material layer supported on the positive electrode current collector, wherein
the positive electrode active material layer includes the coated active material according to any one of Techniques 1 to 8.

With this configuration, the positive electrode according to Technique 9 can effectively suppress side reactions to further enhance the cycle characteristics of a secondary battery.

### (Technique 10)

A secondary battery including:
the positive electrode according to Technique 9;
a negative electrode; and
an electrolyte.

With this configuration, the secondary battery according to Technique 10 can enhance cycle characteristics.

### Examples

The present disclosure is described in more detail below with reference to examples. The following examples are merely illustrative of one aspect and are not intended to limit the present disclosure.

### (Example 1)

### (Preparation of Coated Active Material)

A powder of a positive electrode active material having a composition of LiNi_{0.88}Co_{0.085}Mn_{0.035}O₂ and a powder of hydroxyapatite having a composition of Ca₅(PO₄)₃(OH) were prepared. The average particle diameter of the particles of the positive electrode active material was 4.5 µm. The average particle diameter of the particles of the hydroxyapatite was 200 nm. These average particle diameters were median diameters determined by a laser diffraction scattering method.

The positive electrode active material and the hydroxyapatite were weighed in a mass ratio of positive electrode active material:hydroxyapatite = 88.4:11.6. These materials were loaded into a dry particle composing machine, "Hybridization System" (manufactured by Nara Machinery Co., Ltd.) and subjected to a mechanical composing process at a rotational speed of 9,600/min, at a peripheral speed of 60 m/s, and for a processing time of 3 minutes. Thus, a coated active material was obtained in which the surfaces of the particles of the positive electrode active material were each coated with an apatite-containing particle layer.

### [Fabrication of Evaluation Cell]

The coated active material obtained as described above, acetylene black (AB), and polyvinylidene fluoride (PVDF) were stirred with the addition of N-methyl-2-pyrrolidone (NMP) to prepare a positive electrode slurry. The mass ratio of these materials in the positive electrode active material layer was coated active material:AB:PVDF = 96:2:2.

The positive electrode slurry was applied onto the surface of an aluminum foil (1.45 cm × 1.45 cm), the coating film was dried, and then rolled to form the positive electrode active material layer. Thus, a positive electrode was obtained.

The nonaqueous electrolyte solution was prepared as follows. First, ethylene carbonate (EC), ethyl methyl carbonate (EMC), and dimethyl carbonate (DMC) were mixed in a volume ratio of EC:EMC:DMC = 20:5:75 to prepare a nonaqueous solvent. LiPF₆ was dissolved in the nonaqueous solvent thus obtained to a concentration of 1 mol/L to obtain a solution. This solution was used as the nonaqueous electrolyte solution.

The positive electrode, a Li metal foil (2 cm × 2 cm, 200 µm thick) serving as the counter electrode, a separator, and the nonaqueous electrolyte solution were used to fabricate a laminated half-cell. As the separator, a PP/PE/PP three-layer separator was used.

Thus, the evaluation cell of Example 1 was obtained.

### (Example 2)

In the preparation of the coated active material, the mass ratio between the positive electrode active material and the hydroxyapatite was changed to positive electrode active material:hydroxyapatite = 95.0:5.0. The coated active material was prepared and an evaluation cell was fabricated in the same manner as in Example 1 except for the above.

### (Comparative Example)

In the preparation of the positive electrode, the positive electrode active material used in Example 1 was used without being coated with an apatite-containing particle layer. That is, in the positive electrode of Comparative Example 1, the positive electrode active material having the composition of LiNi_{0.88}Co_{0.085}Mn_{0.035}O₂, having an average particle diameter of 4.5 µm, and having a surface not coated with an apatite-containing particle layer was used. An evaluation cell was fabricated in the same manner as in Example 1 except for the above.

### [Evaluation of Battery]

### (Output Test)

For the evaluation cells of Example 1, Example 2, and Comparative Example, at an ambient temperature of 25°C, a constant-current charge was performed at a current value of 0.2C until the voltage reached 4.5 V, followed by a constant-voltage charge at 4.5 V. The charge was terminated at a current value equivalent to 0.02C. After a rest for 20 minutes, a constant-current discharge was performed at a current value of 0.1C until the voltage reached 2.5 V, followed by a rest for 20 minutes. Next, a charge was performed again under the above charging conditions, and the initial charge capacity was measured. After a rest for 20 minutes, a constant-current discharge was performed at a current value of 0.2C until the voltage reached 2.5 V, and the initial discharge capacity was measured. The initial charge capacity and the initial discharge capacity thus obtained were used to calculate the initial charge and discharge efficiency. Thus, the initial discharge capacities of the evaluation cells of Example 1, Example 2, and Comparative Example were obtained. The output characteristics were evaluated based on the initial charge and discharge efficiency calculated from the initial charge capacity and the initial discharge capacity.

### (Trickle Test)

A trickle test was conducted using the evaluation cells of Example 1, Example 2, and Comparative Example evaluated for output characteristics by the above method, according to the following procedure. A trickle charge was performed, in which a constant-current charge was performed at a current value of 0.2C until the voltage reached 4.6 V, followed by maintaining the voltage of 4.6 V for 72 hours at an ambient temperature of 55°C. From the charging curve during the trickle charge, the accumulated charge capacity for the period from 48 hours to 72 hours during the trickle charge was calculated. This accumulated charge capacity correlates with the amount of side reactions in the battery, and it can be determined that the larger the accumulated charge capacity, the larger the amount of side reactions.

### (Cycle Test)

The evaluation cells of Example 1, Example 2, and Comparative Example evaluated for output characteristics by the above method underwent a temperature change to an ambient temperature of 55°C. For these cells, a constant-current charge was performed at a current value of 0.2 C until the voltage reached 4.5 V, followed by a rest for 20 minutes. Thereafter, a constant-current discharge was performed at a current value of 0.2 C until the voltage reached 2.5 V, followed by a rest for 20 minutes. These charge and discharge were defined as one cycle, and this cycle was repeated 45 times to determine the discharge capacity, charge and discharge efficiency, and capacity retention. From these results, the cycle characteristics of the batteries were evaluated using the ratio of the discharge capacity at the 42nd cycle to the discharge capacity at the 3rd cycle (discharge capacity retention) and the charge and discharge efficiency at the 42nd cycle.

The evaluation results of the above output test, trickle test, and cycle test are shown in Table 1.

**[Table 1]**

| | Coated active material | | Trickle test | Cycle test | | Output test |
|---|---|---|---|---|---|---|
| | Positive electrode active material [mass%] | Apatite-containing particle layer [mass%] | Accumulated charge capacity for 48 to 72 h [mAh/g] | Discharge capacity retention [%] | Charge and discharge efficiency at 42nd cycle [%] | Initial charge and discharge efficiency [%] |
| Example 1 | 88.4 | 11.6 | 0.0941 | 87.7 | 99.19 | 85.4 |
| Example 2 | 95.0 | 5.0 | 0.0552 | 85.1 | 99.57 | 87.8 |
| Comparative Example | 100 | - | 0.1029 | 69.4 | 96.90 | 85.8 |

### (Discussion)

From the results of the cycle test, the secondary batteries of Examples 1 and 2, each including a coated active material in which the positive electrode active material was coated with an apatite-containing particle layer, exhibited significantly enhanced capacity retentions (discharge capacity at the 42nd cycle/discharge capacity at the 3rd cycle), compared with the secondary battery of Comparative Example, which included the positive electrode active material that was not coated with an apatite-containing particle layer. Furthermore, the secondary batteries of Examples 1 and 2 exhibited charge and discharge efficiencies exceeding 99% at the 42nd cycle, demonstrating an enhancement over that of the secondary battery of Comparative Example. Thus, the coated active material in which the positive electrode active material was coated with an apatite-containing particle layer resulted in enhanced cycle characteristics of the secondary battery. Moreover, from the results of the trickle test, the secondary batteries of Examples 1 and 2 exhibited smaller amounts of side reactions than the secondary battery of Comparative Example, also confirming that the configuration in which the positive electrode active material is coated with an apatite-containing particle layer effectively suppresses side reactions in the positive electrode.

As described above, from the results of the cycle test and the trickle test, it was confirmed that the coated active material in which the positive electrode active material is coated with an apatite-containing particle layer can effectively suppress side reactions in the positive electrode, enhancing cycle characteristics.

Furthermore, from the results of the output test, the secondary batteries of Examples 1 and 2, despite the positive electrode active material being coated with the apatite-containing particle layer 13, exhibited output characteristics that were substantially comparable to or higher than those of the secondary battery of Comparative Example. As is evident from the results of the output test of the secondary battery of Example 2, when the proportion of the apatite-containing particle layer in the entire coated active material was adjusted to, for example, 6.0 mass% or less, providing the apatite-containing particle layer instead resulted in enhanced output characteristics. This is presumably due to the special Li-ion conduction enhancement effect provided by the apatite-containing particle 12, as described above.

### INDUSTRIAL APPLICABILITY

The technique of the present disclosure is useful, for example, for lithium-ion secondary batteries.

## Claims

1. A coated active material comprising:
a positive electrode active material; and
an apatite-containing particle layer coating at least a portion of a surface of a particle of the positive electrode active material, the apatite-containing particle layer comprising an apatite-containing particle.

2. The coated active material according to claim 1, wherein
the apatite-containing particle comprises an apatite having a composition represented by the following formula (1):
Caₓ(PO₄)_{y}(A)_{z} (1)
in the formula (1),
the A is at least one selected from the group consisting of OH, F, and Cl, and
0 < x < 10, 0 < y < 6, and 0 ≤ z < 2 are satisfied.

3. The coated active material according to claim 2, wherein
the A is OH, and 0 < z < 2 is satisfied.

4. The coated active material according to claim 2, wherein
the apatite-containing particle comprises, as the apatite having the composition represented by the formula (1), at least one selected from the group consisting of Ca₅(PO₄)₃(OH), Ca₅(PO₄)₃F, and Ca₅(PO₄)₃Cl.

5. The coated active material according to claim 1, wherein
an apatite contained in the apatite-containing particle has a hexagonal crystal structure.

6. The coated active material according to claim 1, wherein
a particle diameter of the apatite-containing particle is 1 µm or less.

7. The coated active material according to claim 1, wherein
a proportion of the apatite-containing particle in the coated active material is 0.1 mass% or more and 15 mass% or less.

8. The coated active material according to claim 1, wherein
a ratio of a particle diameter of the particle of the positive electrode active material to a particle diameter of the apatite-containing particle (the particle diameter of the particle of the positive electrode active material/the particle diameter of the apatite-containing particle) is 2 or more and 40,000 or less.

9. A positive electrode comprising:
a positive electrode current collector; and
a positive electrode active material layer supported on the positive electrode current collector, wherein
the positive electrode active material layer comprises the coated active material according to any one of claims 1 to 8.

10. A secondary battery comprising:
the positive electrode according to claim 9;
a negative electrode; and
an electrolyte.
